# EUROPÄISCHE PATENTSCHRIFT

(11) **EP 1 019 748 B1**
(45) Veröffentlichungstag und Bekanntmachung des Hinweises auf die Patenterteilung: **16.04.2003**
(21) Anmeldenummer: 98940503.0
(22) Anmeldetag: 15.09.1998
(51) Int. Cl.: G01S 17/50, G01S 17/58, G01S 7/481, G08G 1/052, F41G 3/06

(54) **OPTO-ELEKTRONISCHE MESSEINRICHTUNG**
OPTO-ELECTRONIC MEASURING DEVICE
DISPOSITIF DE MESURE OPTOELECTRONIQUE

(30) Priorität: 29.09.1997 AT 165197; 14.01.1998 AT 3798; 26.03.1998 AT 53798
(43) Veröffentlichungstag der Anmeldung: 19.07.2000
(73) Patentinhaber: Riegl Laser Measurement Systems Gmbh, 3580 Horn (AT)
(72) Erfinder: RIEGL, Johannes, A-3754 Trabenreith (AT); ULLRICH, Andreas, A-3003 Gablitz (AT)
(74) Vertreter: Révy von Belvárd, Peter
(86) Internationale Anmeldenummer: IB9801423
(87) Internationale Veröffentlichungsnummer: WO99017135

(56) Entgegenhaltungen:
- EP-A- 0 680 027
- US-A- 3 392 450
- US-A- 3 892 466
- US-A- 5 221 956

## Beschreibung

Die Erfindung bezieht sich auf ein Verfahren zum Betreiben einer opto-elektronischen Meßeinrichtung nach dem Oberbegriff des Anspruches 1.

Bekannte Laser-Meßeinrichtungen für die das erfindungsgemäße Verfahrens angewendet werden soll, und wie sie beispielsweiswe aus der US-A-5,221,956 bekannt geworden sind, weisen typischer Weise Visiereinrichtungen auf, die mit einem Fadenkreuz- oder - wie im Falle der genannten US-A- - mit einem Spot-Absehen ausgerüstet sind. Diese Absehen erleichtern das Visieren auf ein Ziel, z.B. auf ein Kraftfahrzeug, dessen Geschwindigkeit überprüft werden soll. Das Zentrum des Absehens bezeichnet in etwa die Achse des vom Gerät ausgesandten, scharf gebündelten Laserstrahles.

Beim Einsatz solcher Geräte zur Verkehrsüberwachung, gibt es von Seiten der Behörden eine ganze Reihe von Auflagen und Vorschriften, durch welche Fehlmessungen verhindert werden sollen. Eine dieser Auflagen betrifft die sogenannte ''Zuordnungssicherheit", die gewährleisten soll, daß sich nur das tatsächliche Meßobjekt im Laserstrahl des Gerätes befindet und die Messung nicht etwa durch ein anderes Fahrzeug beeinflußt werden kann, das nur zum Teil vom Meßstrahl erfaßt wird. Bei bekannten Geräten hat der Meßstrahl einen Öffnungswinkel von 3 mrad, mit der Eichtoleranz ergibt sich ein möglicher Meßstrahl innerhalb eines Winkels von 5 mrad, d.h., daß in einem Abstand von 500 m der Meßstrahl selbst einen Durchmesser von ca. 1,5 m erreicht, wobei allerdings unter der Berücksichtigung der zulässigen Toleranzen ein Meßfeld mit einem Durchmesser von 2,50 m zu berücksichtigen ist.

Der Exekutivbeamte muß nun beurteilen, ob sich in dem Meßfeld, von welchem ihm nur das Zentrum bekannt ist, neben den Meßobjekten, die ja sehr unterschiedliche Größen besitzen, wie Pkw, Lkw oder Motorräder, noch andere Fahrzeuge befinden können. Es bedarf viel Erfahrung, um diese Abschätzung unter den sehr unterschiedlichen Meßbedingungen wie sie sich bei Einsätzen bei Tag oder Nacht, bei nasser Fahrbahn etc. ergeben können, mit der notwendigen Sicherheit durchzuführen.

Bei Geräten einer neuen Generation kann bei Einhaltung der Vorschriften bezüglich der Augensicherheit der Lasersendeeinrichtung durch verbesserte Technologien in der Signalverarbeitung eine wesentlich größere Reichweite erzielt werden. Für die Exekutive sind solche Geräte insofern erwünscht, als sie erstens eine Messung aus großer Distanz erlauben, aus welcher der Fahrzeuglenker das Meßgerät, bzw. die Exekutivbeamten noch nicht erkennen kann und daher sein Fahrverhalten nicht verändern wird. Zweitens ist es bei einer Messung aus großer Distanz im allgemeinen nicht erforderlich, das Meßgerät dem bewegten Ziel nachzuführen und es ergeben sich daher bei der Messung keine Abweichungen, die auf unterschiedliche Meßwinkel zurückzuführen sind (sogenannter Cosinus-Effekt). Schließlich haben die Exekutivbeamten bei Messung aus großer Distanz bei Feststellung einer Geschwindigkeitsübertretung hinreichend Zeit und damit die Möglichkeit, das betreffende Fahrzeug anzuhalten. Diese Geräte der neuen Generation haben einen wesentlich schärfer gebündelten Meßstrahl, beispielsweise mit einem Öffnungswinkel von 1 - 1,5 mrad. Es ist daher bei diesen Geräten über den gesamten, erweiterten Meßbereich noch schwieriger, die Auflagen bezüglich der Zuordnungssicherheit einzuhalten. Denn ein besonderes Problem bei solchen Messungen besteht ja darin, daß speziell auf Straßen mit dichtem Verkehr, es dazu kommen kann, daß beim Anvisieren eines Fahrzeuges der Laser-Meßstrahl ein benachbartes Fahrzeug trifft.

Dieses Problem wird gemäß der Erfindung durch die kennzeichnenden Merkmale des Anspruches 1 gelöst. Zwar ist es für Flak-Zielgeräte nach der US-A-3,892,466 bekannt, eine innere, dem Öffnungswinkel eines Laserstrahles entsprechende Spot-Zielmarkierung vorzusehen und darum herum einen weiteren Kreis. Dieser letztere dient jedoch der automatischen Verfolgung eines dort in Form von vier Quadranten vorliegenden Empfängers (Tracking). Wie oben erwähnt, ist es jedoch für terrestrische Messungen, d.h. insbesondere für die Messung der Geschwindigkeit eines Fahrzeuges, kaum nötig, ein solches Tracking durchzuführen. Während es für den Schutz vor Fliegerangriffen unerheblich ist, ob nun ein oder zwei nebeneinander bzw. hintereinander fliegende Flugzeuge im Visier sind (da es doch genügt, wenn eines davon abgeschossen wird) ist dies für die Verkehrsüberwachung, insbesondere auch auf Grund bestehender Vorschriften bezüglich der Zuordnungssicherheit, eben nicht der Fall.

Gerade diese Zuordnungssicherheit wird aber durch das erfindungsgemäße Verfahren gesichert.

Weitere Merkmale der Erfindung ergeben sich aus der Beschreibung einiger Ausführungsbeispiele und unter Bezugnahme auf die Zeichnung, worin in
- Fig. 1: ein Laser-Geschwindigkeitsmeßsystem schematisch in Form eines Blockschaltbildes gezeigt wird;
- Fig. 2: im Axialschnitt eine mögliche Ausführungsform einer für das erfindungsgemäße Verfahren zur Anwendung kommenden Visiereinrichtung für eine Laser-Geschwindigkeitsmeßeinrichtung veranschaulicht;
- Fig- 3: ebenfalls im Schnitt ein Detail der Visiereinrichtung zeigt;
- Fig. 4: zeigt das Gesichtsfeld der Visiereinrichtung mit dem erfindungsgemäß zur Anwendung kommenden Absehen; wozu die
- Fig. 4a - 5d: beispielhaft verschiedene Ausbildungen von Absehen veranschaulichen; die
- Fig. 6-8: veranschaulichen durch die Visiereinrichtung sichtbare Ziele in unterschiedlichen Entfernungen, wobei die Vergrößerung der Darstellung so gewählt ist, daß die Ziele jeweils in gleicher Größe erscheinen und die Absehen daher verschieden groß abgebildet sind;
- Fig. 9: stellt einen Schnitt durch eine Variante zu Fig. 2 eines Laser-Entfernungs- und/oder Geschwindigkeitsmeß-Gerätes dar, wie es gemäß der Erfindung zur Anwendung kommt; wovon die
- Fig. 10 und 11: ein Detail der in Fig. 9 gezeigten Einrichtung in je einer Variante zeigen.

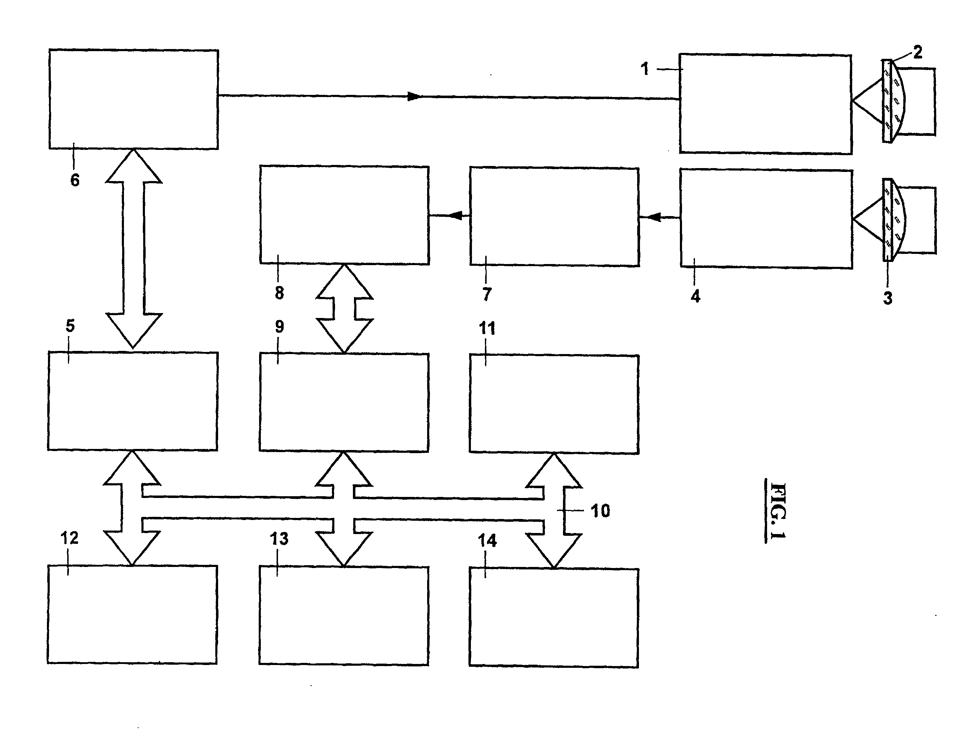

Die Figur 1 zeigt in Form eines Blockdiagrammes schematisch den Aufbau eines Laser-Geschwindigkeitsmeßsystems gemäß der Erfindung. Mit 1 ist ein Laser-Transmitter bezeichnet, der eine Laserdiode aufweist, welcher eine Optik 2 vorgeschaltet ist, die die Emitterzone des Lasers vorzugsweise ins Unendliche abbildet. Neben der Sendeoptik 2 ist eine Empfängeroptik 3 vorgesehen, deren optische Achse parallel zu der der Sendeoptik 2 ausgerichtet ist. Die Empfängeroptik 3 konzentriert die von einem im Strahlengang der Sendeoptik befindlichem Objekt bzw. Ziel im allgemeinen diffus reflektierte Strahlung auf eine Empfangsdiode 4. Mit Vorteil wird als Empfangsdiode eine Avalanche-Diode eingesetzt. Vorzugsweise sind Sende- und Empfangsdioden in ihrer spektralen Charakteristik aufeinander abgestimmt, wobei die Empfangsdiode ihre maximale spektrale Empfindlichkeit in dem Bereich aufweist, in welchem die Sendediode maximal emittiert. Da die Empfangsdiode 4 aber neben der von der Sendediode emittierten und vom Ziel reflektierten Strahlung viel Störstrahlung in Form von Tageslicht oder Licht von den verschiedensten Kunstlichtquellen empfängt, kann es vorteilhaft sein, der Empfangsdiode ein möglichst schmalbandiges, optisches Filter vorzusetzen, welches seine maximale Transmission in dem Spektralband aufweist, in welchem der Laser emittiert.

Der Lasertransmitter 1 umfaßt neben der Laserdiode einen Impulsgenerator, der die Laserdiode ansteuert. Der Lasertransmitter gibt, wenn er vom Prozessor 5 entsprechend angesteuert wird eine kurze Folge von Laserimpulsen, sogenannte Bursts, ab. Ein solcher Burst kann je nach vom Prozessor gegebenen Befehl 5 - 500 Impulse umfassen. Im Regelfall wird ein solcher Burst etwa 200 Impulse aufweisen. Mittels eines vom Prozessor steuerbarem Verzögerungsgenerators 6 können die einzelnen Impulse eines Bursts in ihrer Phasenlage verändert werden, wobei die Phasenverschiebung periodisch erfolgt. In einer bevorzugten Ausführungsform der Erfindung wiederholen sich beispielsweise die Phasenbeziehungen jeweils mit einer Periode von 5 Impulsen.

Die von der Diode 4 empfangenen Signale werden in einer Verstärker- und Analog-Signalprozessorstufe 7 verstärkt und bearbeitet. Die auf diese Weise bearbeiteten Signale werden in einem Analog-/Digital-Converter 8 mit einer Sample-Frequenz von vorzugsweise 60 MHz digitalisiert. Diese gesampelten Echo-Signale werden in einem Speicher 9 abgelegt. Zufolge der Phasenverschiebung der Sendeimpulse eines Bursts gegenüber der Samplefrequenz werden die gesampelten Echosignale in verschiedene Speicherzellen abgelegt. Weist die Phasenverschiebung, wie oben ausgeführt, eine Periodizität von 5 Impulsen auf, so wird der gesampelte Puls nach 5 Impulsen auf den vorhergehenden aufaddiert. Umfaßt ein Burst z.B. 200 Impulse und werden die digitalisierten Impulse mit der Periode 5 "verkämmt", so werden jeweils in einer Speicherzelle 40 Digitalwerte aufaddiert und die Sample-Frequenz von 60 MHz erscheint um die Periodenzahl der Verkämmung vergrößert, in dem vorliegenden Beispiel auf 300 MHz.

Der Prozessor 5 und der Datenspeicher 9 sind durch einen Datenbus miteinander verbunden, der schematisch angedeutet und mit 10 bezeichnet ist. An diesen Datenbus 10 sind ferner ein Programmspeicher 11 für den Prozessor 5 angeschlossen, sowie ein Datenzwischenspeicher 12, in welchen nach einer ersten Auswertung durch den Prozessor 5 Rohdaten abgelegt werden, die am Ende des Meßzyklus ausgelesen werden. Aus diesen Rohdaten wird mit im Programmspeicher abgelegten Algorithmen ein Geschwindigkeitswert für ein Ziel ermittelt und über das ebenfalls am Datenbus angeschlossene Display 13 zur Anzeige gebracht. Neben dem Geschwindigkeitswert können noch weitere Daten berechnet werden, wie z.B. der zu dem Geschwindigkeitswert gehörige Entfernungswert und/oder die Signalamplitude, das Signal-Rauschverhältnis oder statistische Werte wie Streuung oder Sigma. Alle diese Werte können sowohl am Display 13 angezeigt, als auch über eine Datenschnittstelle 14 ausgegeben und z.B. in einem nachgeschaltetem Computer weiter bearbeitet und abgespeichert werden.

Die obige Beschreibung des Laser-Geschwindigkeitsmeßsystems ist nur als ein Ausführungsbeispiel zu verstehen. Die Erfindung kann selbstverständlich auch in Kombination mit Gerätekonzepten, insbes. mit anderen Signalverarbeitungseinrichtungen angewendet werden. So ist es auch möglich, die erfindungsgemäße Ausbildung und Anordnung des Absehens an Geräten einzusetzen, die eine konventionelle Analogsignalverarbeitung aufweisen.

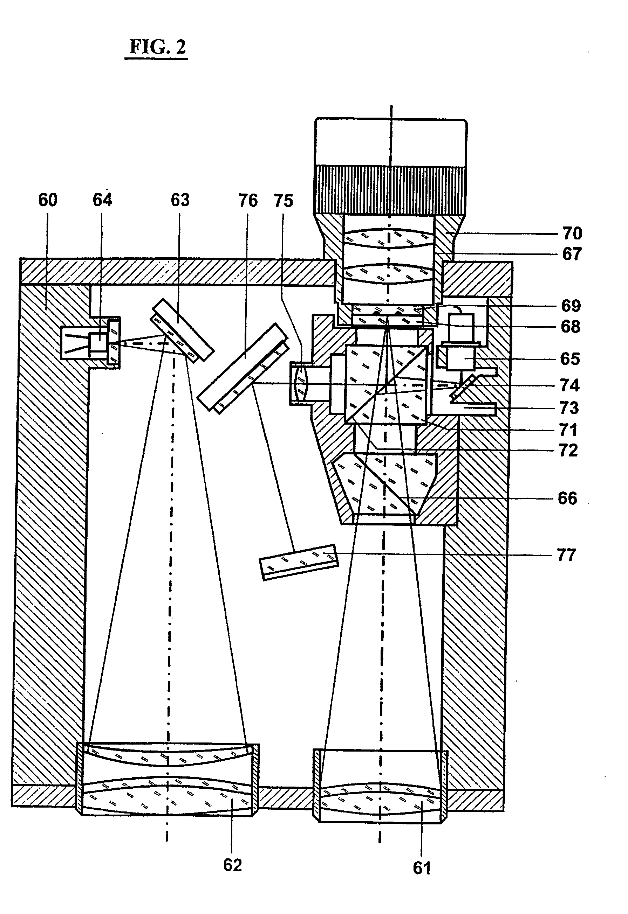

Der Laser-Geschwindigkeitsmesser ist mit einer Visiereinrichtung ausgestattet, deren optische Achse parallel zu der des Laser-Transmitters ist. In einer bevorzugten Ausführungsform wird als Objektiv des Lasersenders das Objektiv der Visiereinrichtung mitverwendet. Ein solches System ist in Fig. 2 veranschaulicht: In Fig. 2 ist eine Laser-Entfernungs-Meßeinrichtung mit co-linearem Sende- und Visierkanal gemäß gezeigt. Mit 60 ist ein Gehäuse aus Leichtmetall bezeichnet, das an seiner Vorderseite ein Sendeobjektiv 61 und ein Empfangsobjektiv 62 trägt. Im Strahlengang des letzteren befindet sich ein Umlenkspiegel 63 und eine Laser-Empfangsdiode 64, z.B. eine sogen. Avalanche-Diode. Die Sendeoptik hat eine Mehrfachfunktion: erstens dient das Sendeobjektiv 61 als Kollimator, der die lichtemittiernde Fläche der Laserdiode 65 ins Unendliche abbildet. Zweitens dient das Sendeobjektiv 61 als Teil eines Zielfernrohrsystems, welches das Anvisieren eines Zieles und Ausrichten des Laserssenders auf dieses Ziel ermöglicht. Dieses Femrohrsystem verfügt über ein Umkehrprisma 66 und ein mehrteiliges Okular 67. Die Fassung 70 des Okulars weist ein Feingewinde auf und ist mit diesem im Gehäuse 60 zur Scharfstellung axial verstellbar. Zwischen Umkehrprisma und Okular befindet sich ein Strahlenteilungsprisma 71, dessen Teilungsfläche 72 in der Weise teilverspiegelt ist, daß bevorzugt Infrarotstrahlung der von der Sendediode 65 emittierten Wellenlänge reflektiert wird, während sichtbares Licht weitgehend ungestört passiert. Eine aus zwei Glasplättchen 68 und 69 aufgebaute Strichplatte ist in die Fassung 70 des Okulares 67 integriert. In das Plättchen 69 ist an der dem Plättchen 68 zugewendeten Seite ein Absehen eingraviert. Beide Plättchen sind mittels eines optischen Kittes (z.B. Kanada-Balsam) miteinander verkittet. Die Laserdiode 65 wird über einen Justierspiegel 74 in das Strahlenteilungsprisma 71 eingespiegelt.

Ein Objektiv 75 und ein Umlenkspiegel 76 dienen zur Einspiegelung eines Displays 77 in den Strahlengang der Visiereinrichtung. Nicht gezeigt ist in der Abbildung die Sende-, Empfangs- und Auswerte-Elektronik sowie die Stromversorgung und die verschiedenen Schalt- und Steuereinrichtungen.

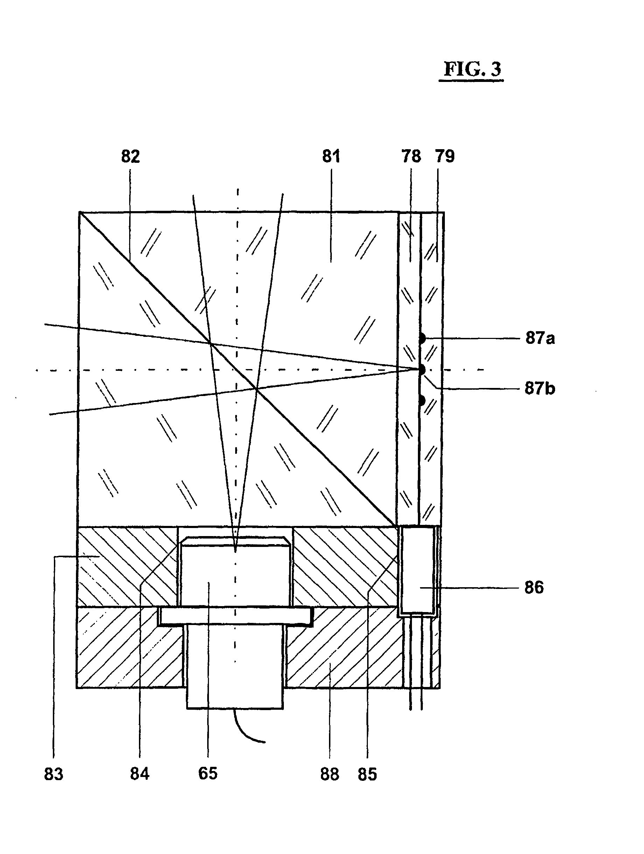

Die Ebene der Strichplatte, in welcher die Zwischenabbildung erzeugt wird, weist ein Absehen in Form eines Kreises 87a und eines zentralen Spots 87b auf, die in die Glasplatte eingraviert bzw. eingeätzt sind ( siehe hierzu auch die in Fig. 3 gezeigte Ausführungsvariante zu der Lösung gemäß Fig. 2 ). Im Interesse einer deutlicheren Darstellung sind der Kreis 87a und der Spot 87b vergrößert gezeigt. Die Strichplatte weist eine seitliche Beleuchtung in Form einer LED 86 auf, die in ihrer Helligkeit regelbar ist. Die Lasersende-Dioden können unterschiedlich aufgebaut sein: sie können ein einziges Diodensystem umfassen, können aber auch aus einer Zahl von Einzeldioden aufgebaut sein. Im vorliegenden Beispiel besteht sie aus drei Dioden. Die Emitterzonen setzen sich somit aus drei schmalen, parallelen Balken zusammen. Es kann vorteilhaft sein, diese Balken nicht scharf in den Objektraum abzubilden. Vorzugsweise wird die Laserdiode nicht exakt in der Zwischenbildebene angeordnet, sondern geringfügig axial versetzt, so daß sich am Ziel ein unscharfer, im wesentlichen rechteckiger Infrarot-Lichtfleck als Meßfeld ergibt.

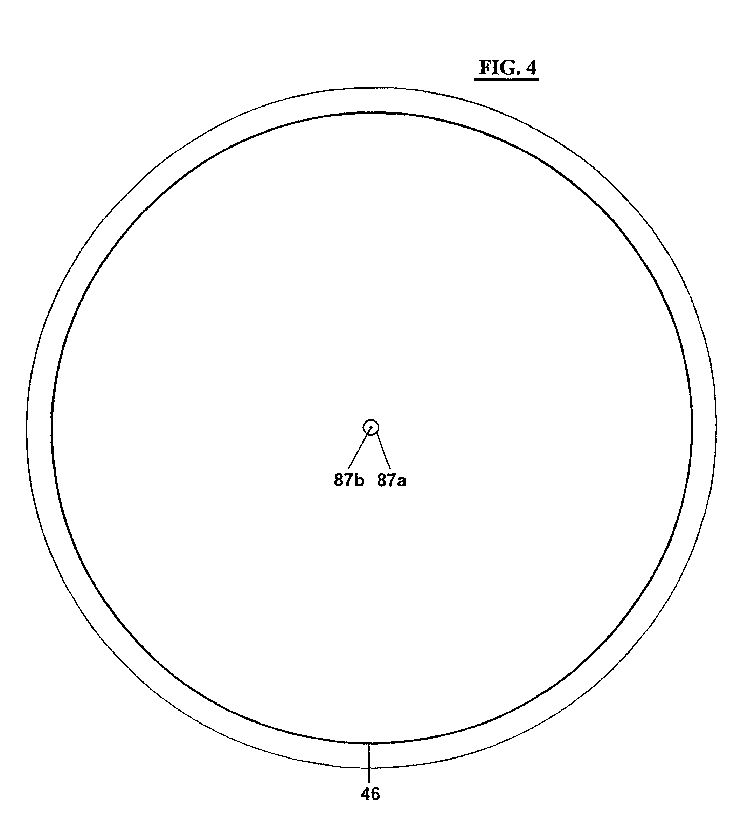

In Fig. 4 ist das gesamte Gesichtsfeld der Visiereinrichtung gezeigt, wobei die Gesichtsfeldgrenze mit 46 bezeichnet ist. Die Geschwindigkeitsmeßeinrichtung ist für eine Reichweite von ca. 1000 m ausgelegt, das Fernrohrsystem der Visiereinrichtung besitzt eine 6-fache Vergrößerung, um auch über große Distanzen noch ein einwandfreies Zielen zu ermöglichen. Der Meßstrahl hat einen Öffnungswinkel von 1,5 mrad. Das kreisförmige Absehen 87a entspricht in seiner Größe diesem Meßstrahl zuzüglich der Einstelltoleranz, in dem Beispiel entspricht der Durchmesser des Kreises 87a einem Öffnungswinkel von 3 mrad. Beim Messen der Geschwindigkeit eines Fahrzeuges darf im Inneren des Kreises 87a nur das eigentliche Ziel sichtbar sein und auch nicht Teile von anderen Fahrzeugen, da dann eine einwandfreie Zuordnung des Meßergebnisses zum Ziel nicht mehr gewährleistet wäre.

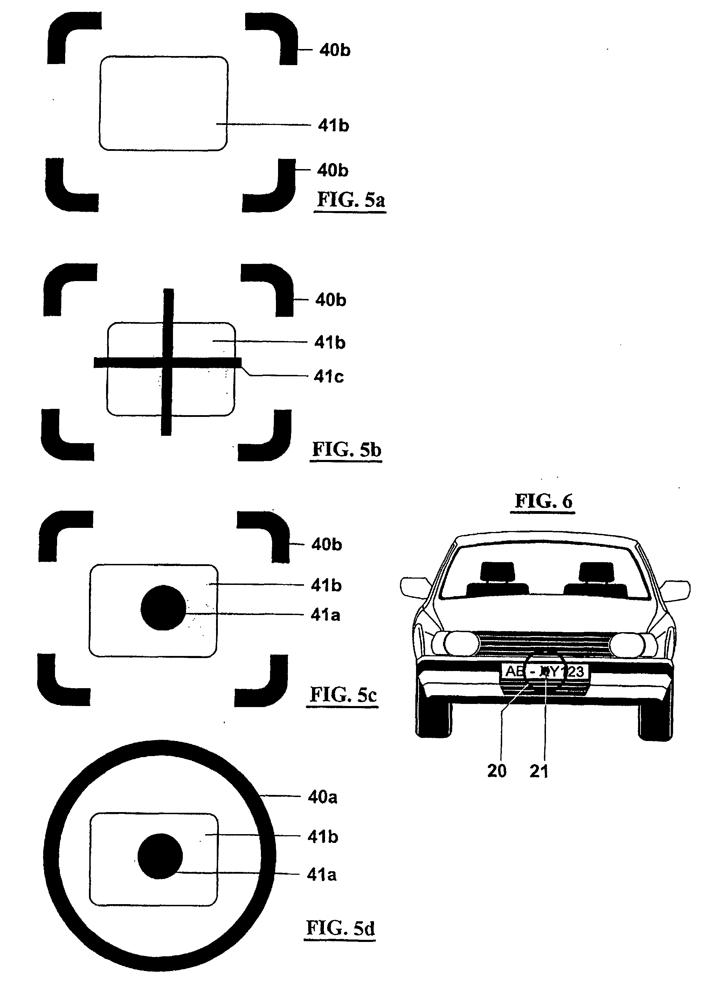

In den Figuren 5a bis 5d sind verschiedene Ausbildungen von Absehen dargestellt. Die Figuren 5a bis 5c zeigen Beispiele von Absehen mit den abgerundeten Ecken 40b eines rechteckigen Rahmens, wobei der eigentliche, in der Realität natürlich unsichtbare Infrarot-Meßfleck als schraffiertes Rechteck 41b angedeutet ist.

Das Absehen gemäß Fig. 5a weist keine Markierung des Zentrums auf, in Fig. 5b ist ein Fadenkreuz 41 c zur Markierung des Zentrums vorgesehen, in Fig. 5c dient ein Spot 41a bzw. ein Kreis zur Kennzeichnung der optischen Achse des Systems.

Das Absehen gemäß der Fig. 5d entspricht im wesentlichen dem in Fig. 4 gezeigtem: es umfaßt einen Kreis 40a mit einem zentralen Spot 41 a. In der Praxis hat sich diese Form des Absehens besonders bewährt. Einerseits erlaubt es ein sehr exaktes Visieren, andererseits ist bei der Herstellung der Geräte die Justage des Absehens wesentlich einfacher, da nicht die Gefahr einer Verdrehung bzw. Verkantung besteht.

Die Fig. 3 zeigt in einer Ausführungsvariante die Strichplatte 78, 79 im Schnitt. Die Linien 40a, 40b bzw. 41c und der Spot 41a des Absehens sind in die Strichplatte 79 eingeätzt. Die dadurch gebildeten Rillen 87a und 87b werden anschließend mit Farbstoff gefüllt. Vor einem hellen Hintergrund erscheint ein solches Absehen dunkel, es deckt im Visier sichtbare Objekte ab. Bei Verwendung des Gerätes in der Dunkelheit oder Dämmerung wird die Strichplatte seitlich, von einer Kante aus mittels einer LED 86 beleuchtet. Nach Art eines Lichtleiters bleiben die polierten Flächen der Strichplatte 79 dunkel, lediglich entlang der Rillen 87a, 87b tritt diffus gestreutes Licht aus der Strichplatte aus, so daß dann das Absehen hell vor dem dunklen Hintergrund erscheint. Das Ein- und Abschalten der Beleuchtung 86 kann manuell aber auch automatisch erfolgen, ebenso eine allfällige Helligkeitsregelung. Die Farbe der LED 86 wird so gewählt, daß sich gegenüber typischen Zielen ein maximaler Kontrast ergibt. Bei Einsatz der Geräte für die Verkehrsüberwachung hat sich eine grüne LED bewährt, da sich sowohl gegenüber den Fahrzeugscheinwerfern als auch gegenüber den Fahrzeugheckleuchten ein sehr guter Kontrast ergibt.

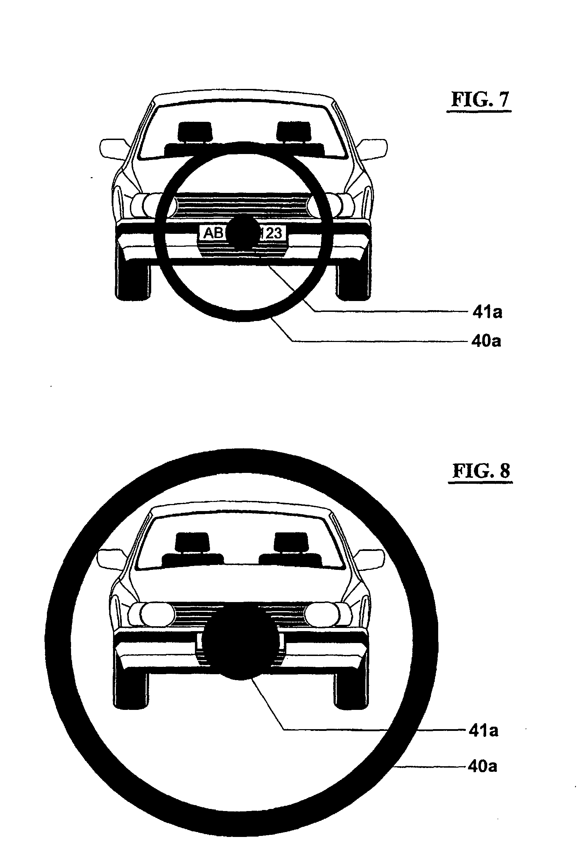

Die Figuren 6 bis 8 zeigen schließlich die wesentlichen Ausschnitte aus den Gesichtsfeldern der Visiereinrichtung mit typischen Zielen, die aus sehr unterschiedlichen Entfemungen anvisiert werden. In Fig. 6 ist ein PKW gezeigt, der aus einer Entfernung von nur 100 m anvisiert wird. Das Absehen ist schmäler als die Kennzeichentafel und ist zur Gänze innerhalb der Fahrzeugkontur. Auch in der in Fig. 7 gezeigten Situation, bei welcher der PKW aus einer Entfemung von 300 m anvisiert worden ist, befindet sich das Absehen, abgesehen von einem Stück der Fahrbahn, innerhalb der Fahrzeugkontur, die Messung kann auch in diesem Fall nicht durch ein anderes Fahrzeug beeinflußt werden. Anders ist die Situation im dritten Fall, bei welchem der PKW aus einer Entfernung von 1000 m gemessen werden soll. Trotz der sehr engen Bündelung des Meßstrahles (1,5 mrad) erreicht das durch das Absehen gekennzeichnete Feld, in welchem auch die Einstelltoleranzen berücksichtigt sind, in dieser Entfernung einen Durchmesser von 3 m. Wie dem Bild unschwer zu entnehmen ist, kann neben dem eigentlichen Ziel noch ein weiteres Fahrzeug, bzw. Teile eines solchen, erfaßt werden. Dies wird besonders dann der Fall sein, wenn mehrere Fahrzeuge mit relativ geringem Abstand hintereinander fahren. Um in diesem Fall ein Meßergebnis eindeutig einem Fahrzeug zuordnen zu können, muß der Anwender darauf achten, daß innerhalb des gekennzeichneten Feldes kein weiteres Objekt mit ähnlicher Geschwindigkeit während des Meßvorganges vorhanden ist.

Man erkennt aber auch, daß es mit dem neuartigen Absehen auch für weniger geübte Beamte sehr einfach ist, entweder das Gerät so auszurichten, daß ein weiteres Fahrzeug mit Sicherheit nicht erfaßt wird oder, sofern dies nicht möglich sein sollte, eine Messung zu unterlassen oder die Resultate zu annullieren.

Richtet der Benutzer das Meßgerät auf ein Ziel aus und bringt das Zentrum des Absehens mit dem Ziel zur Deckung, so wird dieses vom Laser-Meßstrahl getroffen.

Unter rauhen Betriebsbedingungen kann allerdings das Gerät relativ großen Beschleunigungen ausgesetzt sein, welche die relative Zuordnung von Strahlenteilungsprisma, Strichplatte und Laserdiode beeinträchtigen und zur Dejustierung der Visiereinrichtung führen können.

Die Figur 3 veranschaulicht die erfindungsgemäße Lösung dieses Problems im Detail: gemäß der Erfindung ist die Strichplatte direkt auf das Strahlenteilungsprisma 81 aufgekittet. An der Basisfläche des Strahlenteilungsprismas 81 ist eine Platte 83 aus Glas, Keramik oder Metall aufgeklebt, die eine Bohrung 84 zur Aufnahme der Laserdiode 65 aufweist. Die Platte 83 weist eine weitere Bohrung 85 zur Aufnahme einer LED 86 auf, die die Strichplatte 78,79 vom Rand her beleuchtet und bei Dunkelheit die Gravur 87a, 87b des Absehens zum Aufleuchten bringt. Sowohl die Laserdiode 65 als auch die LED 86 werden durch Kleber fixiert und durch eine Deckplatte 88, die mit der Platte 83 beispielsweise verschraubt ist, zusätzlich gesichert.

Die Strichplatte 78, 79 sowie die Diodenplatte 83 bis 86 und 65 werden in einer Vorrichtung in Bezug auf das Teilungsprisma ausgerichtet und in dieser verkittet. Die fertige Einheit wird dann so in der Meßeinrichtung montiert, daß die optische Achse der Visiereinrichtung mit dem Zentrum des Absehens übereinstimmt. Sollte es durch Einwirkung sehr großer Kräfte zu einer Verstellung des Teilungsprismas gegenüber der optischen Achse kommen, so verschiebt sich möglicherweise das Zentrum des Absehens relativ zum Zentrum des Gesichtsfeldes der Visiereinrichtung, die Zuordnung von Laser-Meßstrahl und Absehen bleibt aber stets erhalten.

Die Erfindung ist nicht auf Laser-Geschwindigkeitsmeßeinrichtungen beschränkt, sondern kann mit gleichen Vorteilen auch bei Laser-Entfemungsmeßeinrichtungen, sogenannten Laser-Rangefindern, angewendet werden.

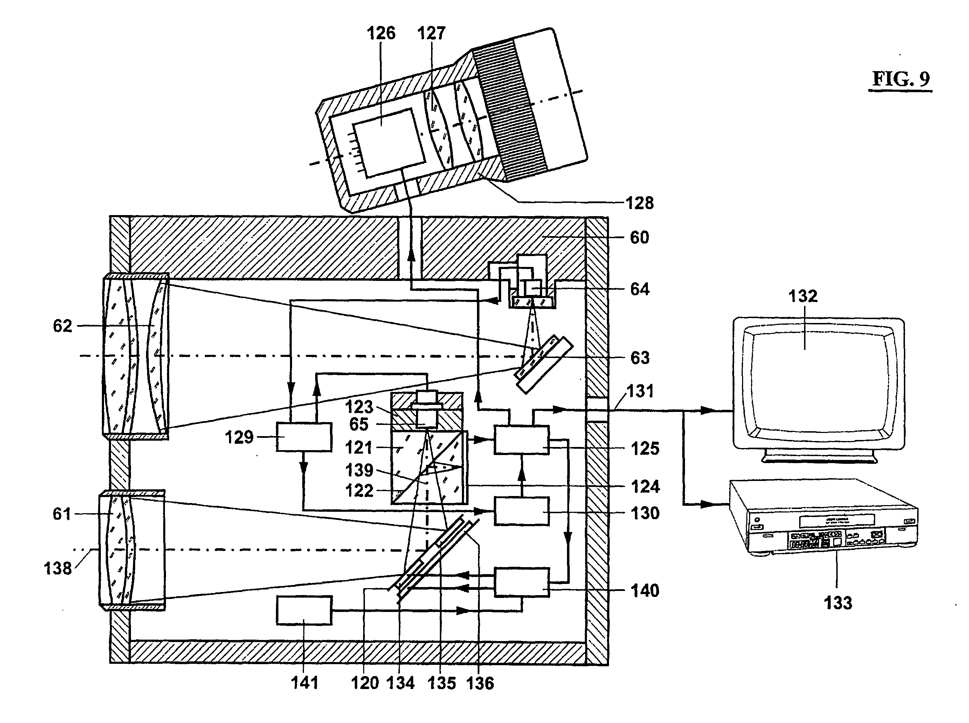

Die Fig. 9 veranschaulicht ebenfalls in einer Schnittdarstellung eine Laser-Entfemungsund Geschwindigkeits-Meßeinrichtung gemäß der Erfindung. In der Zeichnung sind die Elemente, die den in Fig. 2 gezeigten unmittelbar entsprechen, mit den gleichen Bezugszeichen bezeichnet.

In einem Gehäuse 60 ist ein Objektiv 61 der Visiereinrichtung des Gerätes angeordnet, in dessen Strahlengang, die Laserdiode 65 eingespiegelt ist. Ein zweites Objektiv 62 konzentriert die einfallende Strahlung über einen Umlenkspiegel 63 auf eine Photodiode 64. Im Strahlengang des Objektives 61 ist ein weiterer Umlenkspiegel 120 angeordnet, der das einfallende Licht zu einem Strahlenteilerprisma 121 lenkt. Das würfelförmige Teilungsprisma 121 besteht aus zwei Prismen die längs ihrer Hypothenusen-Fläche miteinander verkittet sind. Diese Fläche ist mit einem dichroitischen Belag 122 beschichtet, der bewirkt, daß die Infrarot-Strahlung der Laserdiode 65 im wesentlichen ungeschwächt passieren kann, während Licht aus dem sichtbaren Bereich des Spektrums reflektiert wird. Auf einer Fläche des Prismas 121 ist eine metallische Fassung 123 für die Laserdiode 65, auf einer anderen Fläche ein bildgebendes optoelektronisches Array 124, d.h. also eine Zeile von lichtempfindlichen Elementen, wie Photodioden, aufgekittet. Vorzugsweise handelt es sich dabei um ein farbtüchtiges Array. Die Signale des Arrays 124 werden einer Bildverarbeitungsstufe 125 zugeleitet, die ein Kathodenstrahl- bzw. LCD-Display 126 oder eine andere Anzeigeeinrichtung ansteuert. Dieses Display kann durch eine Lupe 127 vergrößert betrachtet werden. Das Display und die zugehörige Lupe sind in einem separaten Gehäuse 128 untergebracht, das an dem Gehäuse 60 befestigt und gegenüber diesem schwenkbar angeordnet ist.

Das Laserentfernungs- und Geschwindigkeitsmeß-System wird von einer Stufe 129 gesteuert, das einerseits die Laser-Sendediode 65 entsprechend impulsweise mit Energie versorgt. Auf der anderen Seite werden dieser Stufe die Signale der Empfangsdiode 64 zugeführt. Aus der Laufzeit der Impulse werden in der Stufe 129 durch einen Prozessor Entfernungs- und gegebenenfalls in weiterer Folge aus mehreren Entfernungswerten Geschwindigkeitswerte ermittelt. Die Ausgangssignale der Stufe 129 werden einem Zeichengenerator 130 zugeführt, der aus den digitalen Signalen alpha-numerische Zeichen bildet. In dieser Stufe wird auch ein Absehen generiert, das zusammen mit den Meßwerten dem am Display angezeigtem Bild des Zieles überlagert wird. Der Zeichengenerator kann auch über eine elektronische Uhr, z.B. über eine Funkuhr verfügen, so daß gleichzeitig mit den Meßwerten Datum und Uhrzeit der Messung angezeigt werden kann. Die Bildverarbeitungsstufe 125 verfügt ferner über einen Bildspeicher, in welchem das TV-Bild zum Zeitpunkt der Messung mit Absehen und Meßwerten abgespeichert werden kann. Die Bildverarbeitungsstufe 125 weist neben der Anspeisung für das Display 126 einen externen Videoausgang 131 auf, über welchen ein externer Monitor 132 und/oder ein Videorekorder 133 angeschlossen werden kann.

Der Umlenkspiegel 120 kann justierbar ausgebildet sein, um den Laser-Sendestrahl sowie die TV-Visiereinrichtung auf die optische Achse 138 des Objektives 61 auszurichten.

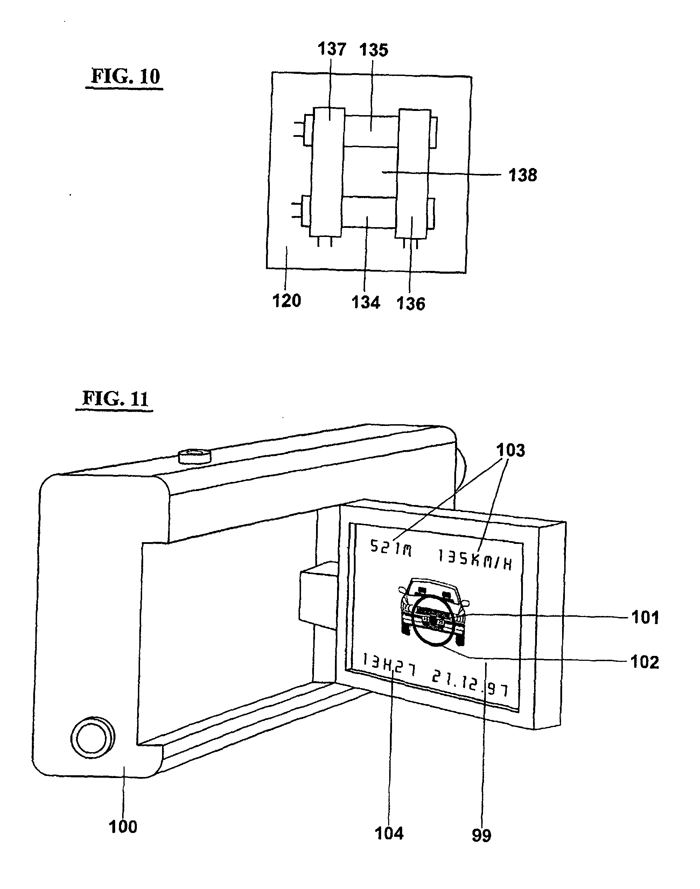

In einer bevorzugten Ausführungsform der Erfindung stützt sich der Spiegel 120 auf zwei orthogonal angeordneten Paare von Piezoschwingern 134 bis 137 ab. Die Aktoren eines Paares 134, 135 und 136, 137 werden jeweils gegenphasig angesteuert, so daß der Spiegel bei Ansteuerung der genannten Aktoren jeweils um Achsen verschwenkt wird, die durch den Schnittpunkt der optischen Achsen 138 und 139 verlaufen (vgl. hierzu auch Fig. 10). Die Aktoren 134 bis 137 werden durch eine Stufe 140 so angesteuert, daß höherfrequenten Bewegungen des Gerätes, wie sie beim Halten aus freier Hand typischer Weise auftreten, ausgeglichen werden und der Laser-Sendestrahl und die optische Achse der Visiereinrichtung durch diese Zitterbewegung nicht beeinflußt werden. Dies ist vor allem bei Verwendung von langbrennweitigen Objektiven mit kleinem Gesichtsfeld wesentlich, wie sie bei modernen Lasermeßgeräten mit großer Reichweite eingesetzt werden. Diese optische Stabilisiereinrichtung wird von Beschleunigungsensoren 141 angesteuert, wobei nur der Frequenzbereich der Zitterbewegungen für eine Kompensation herangezogen wird. Durch 2-fach Integration werden die Winkel ermittelt, um welche das Gerät bewegt wird. Der Spiegel 120 wird in Abhängigkeit von diesen Winkeln um seine beiden Achsen verstellt.

Anstelle von Beschleunigungssensoren oder zusätzlich zu diesen kann in an sich bekannter Weise ein Signal aus dem Bild abgeleitet werden, das als Eingangsgröße für die Ansteuerstufe 140 dient. Das Gesichtsfeld der Empfangseinrichtung muß in einer solchen Ausführung naturgemäß um den maximalen Ablenkwinkel der Stabilisiereinrichtung größer sein als das Gesichtsfeld der Sendeeinrichtung.

Die Bildverarbeitungsstufe 125 kann mit einer "Elektronischen Zoom-Einrichtung" versehen sein, mit welcher das Gesichtsfeld der Visiereinrichtung dem jeweiligen Einsatz angepaßt werden kann. Bei Messungen über große Distanzen wird man ein kleines Gesichtsfeld wählen, bei Messungen in einem Nahbereich ein großes. Da der Öffnungswinkel des Laserstrahles hierbei nicht verändert wird, muß das Absehen, welches in der Regel nicht nur die optische Achse des Laserstrahles bezeichnet, sondern auch die Größe des Meßfeldes anzeigt, mitvergrößert bzw. verkleinert werden. Da das Absehen rein elektronisch in dem Zeichengenerator 130 erzeugt wird, wird es in der nachgeschalteten Bildverarbeitungsstufe 125 zusammen mit dem Video-Bild vergrößert bzw. verkleinert. Um die am Display 126 anzuzeigenden Meßwerte immer in gleicher Größe erscheinen zu lassen, werden in einem solchen Falle die entsprechenden Signale dem Ausgang der Bildverarbeitungsstufe überlagert.

In Fig. 11 ist eine Variante des oben beschriebenen Gerätes gezeigt Anstelle einer Visiereinrichtung mit einem Okular 127, weist das Gerät 100 einen großen, in das Gerät einklappbaren LCD-Bildschirm 99 auf, über welchen in besonders bequemer Weise ein Ziel anvisiert werden kann. Am Bildschirm ist neben dem Ziel das Absehen sichtbar, das durch einen Punkt 101 die Achse des Laserstrahles angibt. Der Kreis 102 bezeichnet das Meßfeld der Einrichtung unter Berücksichtigung der zulässigen Einstelltoleranzen. Mit 103 sind die Meßwerte bezeichnet, mit 104 Datum und Uhrzeit.

Der Vorteil der ausschließlichen Verwendung eines Video-Visiers besteht in der wesentlichen Vereinfachung des optischen Systems, was zu kleineren und leichteren und im allgemeinen auch kostengünstigeren Gerätekonzepten führt, da ein aufwendiges optisches Bildumkehrsystem und eine optische Einrichtung zum Einblenden der Meßwerte entfallen kann. Darüber hinaus bietet dieses Konzept eine Reihe von Optionen, die bei konventionellen optischen Visiereinrichtungen nicht oder nur mit einem großen zusätzlichen Aufwand realisierbar sind. Diese sind im besonderen die Möglichkeit ein extemes, gegebenenfalls weit vom Aufstellungsort des Gerätes angeordnetes Display einzusetzen und eventuell einen gesamten Meßvorgang auf einem handelsüblichen Videorecorder aufzuzeichnen. Eine solche Aufzeichnung ist besonders bei Messungen aus großer Distanz von Vorteil. Soll z.B. die Geschwindigkeit eines Fahrzeuges aus einer Distanz von ca. 1000 m gemessen werden, so wird man im allgemeinen das Fahrzeugkennzeichen in der Visiereinrichtung nicht mit Sicherheit identifizieren können. In einem solchen Fall kann nach der Messung das Fahrzeug in einer Sequenz durch Nachführen des Gerätes bis in einen Nahbereich verfolgt werden, in welchem weitere Einzelheiten, insbesondere das Kennzeichen deutlich erkennbar sind. Durch die ununterbrochene Bildfolge und/ oder die mitaufgezeichnete Zeit ist auch in einem solchen Falle ein Fahrzeug eindeutig den Meßdaten zuordenbar.

Weitere Optionen bestehen in der Möglichkeit eines "elektronischen Zooms" und einer optischen Bildstabilisierung, welche den Einsatzbereich des Gerätes vergrößern und eine sichere Messung über große Distanzen auch aus freier Hand ermöglichen.

## Patentansprüche

1. Verfahren zum Betreiben einer opto-elektronischen Meßeinrichtung, insbesondere einer Geschwindigkeitsmeßeinrichtung zur Verkehrskontrolle, bei dem von einer Sendeeinrichtung (1, 2) eine Folge von Laser-Impulsen ausgesendet und und von einer Empfangseinrichtung (3, 4) die von im Strahlengang der Sendeeinrichtung (1, 2) befindlichen Zielen reflektierten Echosignale empfangen werden, welche von einer Signalverarbeitungsstufe (7) verstärkt, eventuell umgeformt und vorzugsweise digitalisiert werden, wobei aus den Echosignalen in Verbindung mit Startimpulsen Entfernungswerte ermittelt und schließlich aus zumindest zwei Entfernungswerten und den zugehörigen Meßzeitpunkten die Geschwindigkeit des im Strahlengang befindlichen Zieles in einem Prozessor (5) berechnet werden, und wobei zum Ausrichten der Meßeinrichtung auf ein Ziel eine Visiereinrichtung (68, 69; 78, 79) vorgesehen ist, deren optische Achse im wesentlichen parallel zur optischen Achse der Sendeeinrichtung (1, 2) ist und die ein Absehen mit einer, insbesondere kreisförmigen, Markierung (87a) für ein Feld aufweist, das einen vorbestimmten Raumwinkel definiert, **dadurch gekennzeichnet, daß** der Raumwinkel dem Öffnungswinkel des Strahles der Sendeeinrichtung (1, 2) zuzüglich zulässiger Einstelltoleranzen entspricht und die Messung dann erfolgt, wenn innerhalb dieser Markierung nur ein gewähltes Ziel ohne auch nur eines Teils eines anderen Ziels sichtbar ist, und daß vorzugsweise die Markierung einem Öffnungswinkel von 3 mrad entspricht, wenn der Meßstrahl einen Öffnungswinkel von 1,5 mrad besitzt.

## Claims

1. Process for operating an opto-electronic mesuring device, particularly a speed mesuring device for traffic control, wherein a series of laser pulses is sent by transmission means (1, 2), and echo pulses reflected from targets situated in the path of rays of said transmission means (1, 2) are received by receiver means (3, 4) and are amplified, optionally converted and preferably digitised by a signal processing stage (7), distance values being determined from said echo signals in conjunction with the starting pulses, wherein finally the speed of a target situated in the path of rays is calculated in a processor (5) from at least two distance values and the associated measuring instants, and wherein for orienting said mesuring device onto a target sighting means (68, 69; 78, 79) are provided whose optical axis is substantially parallel to the optical axis of said transmission means (1, 2) and which comprises a sight graticule including a, particularly circular, marking (87a) for a field defining a predetermined spatial angle, **characterised in that** the spatial angle corresponds to the aperture angle of the beam of said transmission means (1, 2) plus admissible adjustment tolerances, and measuring is done, when only a selected target is within said marking-without any portion of another target, and that preferably said marking corresponds to an aperture angle of 3 mrad, if the measuring beam has an aperture angle of 1.5 mrad.

## Revendications

1. Procédé de fonctionnement d'un dispositif de mesure optoélectronique, particulièrement d'un dispositif de mesure de vélocité pour le contrôle de la circulation, dans lequel un train d'impulsions laser est émis par un moyen de transmission (1, 2) et les signaux écho réfléchis par des objectifs situés dans la marche des rayons du moyen de transmission (1, 2) sont reçus par un moyen récepteur (3, 4), et sont amplifiés, éventuellement transformés et préférablement numérisés par une étage de traitement de signaux (7), en déterminant des valeurs de distance des signaux écho en relation avec les impulsions de départ, et finalement en calculant la vélocité d'un objectif situé dans la marche des rayons dans un processeur (5) d'au moins deux valeurs de distance et les moments de mesure associés, et dans lequel pour orienter le dispositif de mesure à un objectif un dispositif de visée (68, 69; 78, 79) est prévu, dont l'axe optique est en substance parallèle à l'axe optique du moyen de transmission (1, 2) et qui présente un réticule de visée comprenant une marque (87a), particulièrement circulaire, d'un champ, qui définit un angle spatial prédéterminé, **caractérisé en ce que** l'angle spatial corresponde à l'ouverture du faisceau du moyen de transmission (1, 2) plus des tolérances d'ajustement admissibles, et que la mesure est faite, quand seulement un objectif choisi est visible à l'intérieur de la marque sans aucune partie d'un autre objectif, et que préférablement ladite marque corresponde à un angle d'ouverture de 3 mrad, si le faisceau de mesure a un angle d'ouverture de 1,5 mrad.
